# EUROPEAN PATENT APPLICATION

(11) **EP 2 442 140 A2**
(43) Date of publication of application: **18.04.2012**
(21) Application number: 11472001.4
(22) Date of filing: 14.09.2011
(51) Int. Cl.: G01T 1/24

(54) **Housing for segmentation germanium detector**

(30) Priority: 14.09.2010 BG 11075010
(71) Applicant: Eurobul Inovation Ltd., 1000 Sofia (BG)
(72) Inventor: Abadjiev, Stefan Nikolov, 1320 Bankya (BG); Balabanski, Dimiter Lukanov, 1415 Sofia (BG); Apostolov, Evstati Milchov, 1505 Sofia (BG); Gerl, Jürgen, 63128 Dietzenbach (DE); Kojouharov, Ivan Mihaylov, 55270 Zornheim (DE)
(74) Representative: Neykov, Neyko Hristov

(57) **Abstract**

The invention is related to a housing segmented germanium detector, which can be applied in the construction of measurement devices, instruments and systems, used for monitoring of radiation field in radioactive areas. The design of the housing, which is subject of the invention, favors the creation of improved conditions for cooling the crystal as well as improved pressure load of the crystal. The capsule for a germanium detector consists of a lower board, a compensational element, a lower packing element, a germanium /Ge/ crystal, an upper packing element and an upper board, and an elastic element which is realized as a rectangular wave washer spring.

## Description

### Technical Field of Invention

The invention is related to a housing for a segmented germanium (Ge) detector, and more precisely to the construction of a compact assembly of a holder of a segmented Ge detector, which can find application in the construction of measurement devices, sensors or systems which can be used for monitoring of radiation field in radioactive areas.

### Background of the Invention

In many cases for practical purposes monitoring of the environment is required, which includes radioactive zone analysis, material analysis for different level of radioactive absorption, position analyses of zones with different level of radioactive emission. For such purposes, measuring devices are used including single detectors or sets of detectors, connected to electronic control elements, which allow measurement of the radiation energy, as well as the location of the monitored source. Taking into consideration that the measuring devices are using Germanium crystals and that certain conditions have to be fulfilled in order to carry out precise measurements, it is necessary that the design of such devices is optimized for the normal functioning of the Ge detectors, in particular provides cooling with cryogenic equipment down to a temperature of 100 degrees K, as well as high vacuum in the working space of the Ge crystals.

Depending on the used construction of the measuring devices which use Ge detectors, it is often required to use crystals with a large height dimension, whose production tolerance can be defined as large -for example within 10% of the height of the crystal and it is possible to require several such crystals to be assembled within a single block.

Individual housings for Ge crystals are known which provide the specified general requirements, but their design cannot provide the required compact assembly and minimal sizes in the direction that is perpendicular to the height of the crystal -in case it is required for the realization of specific constructions. The known constructions use mainly bonded internal connections between the working elements/strips of the Ge crystal and the integrated external cables. This requires utilization of specialized technical means for bonding which makes more difficult the technical service and maintenance of the measuring device, especially when changing the crystal in case there is a technical problem. In the present known devices the Ge detectors are fixed by pressing them with spring elements, which is realized in most cases in two counter lying zones, and in most preferred is realization through a dominant point pressing, which means that in these devices the distribution and reduction of the pressure load on the crystals cannot be achieved, which is an important condition for normal functioning of the detectors.

A main disadvantage of the known devices is related to the design and technological limitations regarding the dimensions of the measuring devices. Such limitation is due to fact that Ge crystals with a higher production tolerance are used, for example within 10% of the height of the crystal and the possible requirement for assembling such crystals within a single unit. Because of this the performance of such a device needs to meet special requirements when when designing the housing, including a special realization of the construction in height.

### Summary of the Invention

Having in mind the known level of the equipment in this area, as well as the pointed out disadvantages of the known devices, the aim of the invention is to provide a housing for a segmented Ge detector that is characterized with a secure attachment of the Ge crystal, allowing its orienting and positioning within the housing, and ensuring the attachment of the elements that provide electrical connections between the working elements/strips of the crystal and the associated cables.

An additional objective of the invention is related to the realization of the housing, in such a way that cooling of the total volume of the crystal is provided, as well as a high level of mechanical protection, including in case of necessity the assembly of several crystals, where all used materials meet the requirements to be used in vacuum, radioactive environment and for cryogenic application.

The goal of the invention is achieved with a housing for a Ge detector, consisting of a base, Ge crystal, elastic element and a top cover.

According to the invention inside the base are successively placed from bottom upwards a compensating element, a lower board, a lower packing element, a Ge crystal, an upper packing element and an upper board, and the elastic element is executed as a rectangular wave washer spring.

The profile of the outer walls of the housing is realized in such a way that vertical channels are designed where the cooling plate is mounted.

According to a preferred realization of the capsule the compensating element is designed as a ring.

The lower and the upper boards are realized with specially shaped contact platforms, that include a contact stud or a spring element with a contact stud, a conduction strip and a connector which can be used for connecting to external cables.

It is preferred that the channels on the outer side of the housing are have a prismatic shape, but depending on the external shape and it is possible that they are shaped differently.

The design of the housing, according to the invention, allows the realization of a block assembly, when at least two housing are mechanically connected with connecting elements of a known type.

The housing for a segmented Ge detector, which is subject of the invention, is characterized with its effective and secure construction, which takes advantage of the assembly of specially designed elements, whose combination allows the utilization of crystals with a large production tolerance. The design of the housing-provides conditions for better cooling of the crystal, as well as an improved pressure load on the crystal. The proposed construction is highly technological and as a result a total reciprocity of the similar elements in the construction, as well as reciprocity of the individual housing is achieved.

### Brief Description of the Drawings

The housing for a segmented Ge detector is presented in more details via the attached drawings where:
- fig. 1 - shows a cross-section of the housing with an installed Ge crystal.

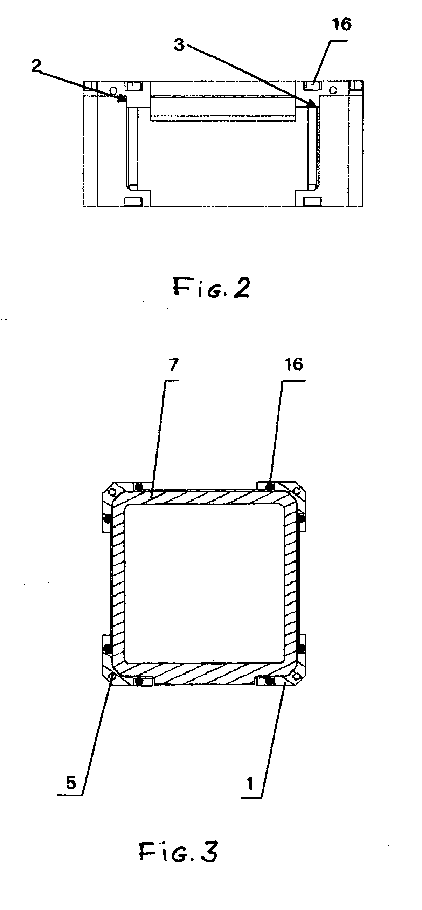

- fig. 2 ― a side view of the housing from fig.1
- fig. 3 - shows a A-A cut of the housing from fig. 1.
- fig. 4 - shows a bottom view of the housing.
- fig. 5 - shows a top view of the housing.
- fig. 6 - shows an axonometric view of the lower board of the housing.
- fig. 7 - shows an option for realization of the lower board of the housing by using elastic contact elements.
- fig. 8 - shows an option for compensating element between the board and the Ge crystal.
- fig. 9 - shows an option for combining the housings as in an assembly of three Ge crystals.

### Detailed Description of the Preferred Embodiment

Further in the description is outlined an example of a possible realization of a housing for a segmented Ge detector, such that the described elements and their placement with respect to each other does not limit the usage of other constructive elements which have similar functionality as the elements described in this possible realization of the invention.

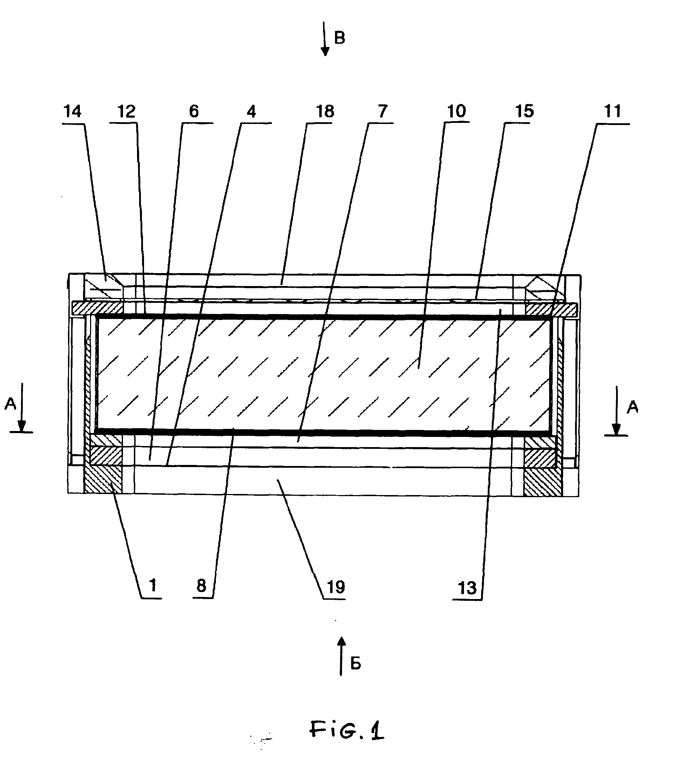

According to the construction displayed in Fig.1, the housing is realized as a compact assembly, which includes the base 1 with form of a box, such that on the outer sides of the walls of the housing are designed frame surfaces 2 and 3.

The base 1 is realized with a support surface 4, which is designed along the whole perimeter and at its ends are outlets 5. The dimensions of the above mentioned surface 4, and especially its width, are defined by the dimensions of the used Ge crystal, as well as the width of the dead-layer zone situated at the end of the crystal, and it is preferred that the above mentioned area is within 6 - 7% of the dimensions of the crystal.

On the support surface 4 is placed a compensating element 6, preferably realized as a ring whose thickness is defined by the thickness of the crystal. It is appropriate, depending on the used Ge crystal, to have an available set of compensation elements with different thicknesses. In the lower part of the base 1 is mounted a lower board 7, realized preferably of a ceramic material, such that on the mentioned lower board 7 is mounted a packing element 8 with profile elements 9, on top of which is placed a Ge crystal 10 with cut chamfers 11 on its upper and lower surfaces. On top of the Ge crystal 10 is placed the packing element 12, shaped with profile elements 9, such that the packing element 8 and the mounted on top of the crystal 10 upper board 13 are realized with a single or double sided conduction strip surfaces.

According to one preferred realization the preferred material the packing elements 8 and 12 is Indium.

The construction described so far is closed at its upper side with the cover 14, and between the upper board 13 and the cover 14 is mounted a profile shaped elastic element 15, for example a rectangular wave washer spring that presses the elements mounted in the housing towards each other. The cover 14 is centered regarding the base 1 using the frame surfaces 2 and 3, and its mounting to the base 1 can be done with the symmetrically positioned connecting elements 16, for example screws.

The described design of the frame surfaces simplifies the mounting and the maintenance operations, since after the mounting of all elements in the base 1 and the successive mounting of the cover 14 to the base 1, the profile elements, which are realized on the surface of the packing elements 8 and 12 are deformed, which in turn provides uniform distribution of the forces, pressing the crystal 10. In this way simultaneously with the uniform distribution of the pressure on the crystal, the dimensions of the contact zones of the pressing surfaces are increased, and as a result the cooling of the crystal 10 is improved. The described mounting of the Ge crystal 10 guarantees its positioning with respect to possible displacements of the crystal, which is possible because of the formation of support elements on the chamfers 11 of the crystal 10. The achieved side positioning determines the position and the orientation of the crystal after its mounting on the base 1.

By mounting together in the housing of the whole set of described elements 6, 7, 8, 10, 12 and 13, and the elastic element 15 the total height of the housing, which is realized, is in the range of a minimum deviation of +/- 0,25mm.

The outer sides of the four walls of the housing are appropriately processed and realized with a profile which makes possible to form channels 17, and one preferred form of the channels 17 is prismatic, which does not limit designing channels with different shapes. These channels are foreseen for providing free space around the base 1 and the boards 7, 13 and are used for connection to external cables, as well as transition vertical zones for the connecting cables, such that the largest vertical dimension of the housing is kept.

After mounting the above described elements in the housing and fixing the cover 14, for example with fixing elements - screws, the housing is assembled, such that in its upper and lower surfaces free service areas 18 and 19 are realized.

In addition in the housing are designed outlets, in which connecting elements are placed, for example screws, for the for fixing the housing to a plain platform of a cold finger, which is not shown on the figures.

The construction of the housing, which is the subject of the invention, allows to be realized a block type mounting, which means that several housing can be connected in one joint assembly. In such cases it is recommended on the outer side of the housings, in the channels 17 a plate 20 to be mounted, which is fixed to the cooling plate. The lowest placed base 1 of the detector assembly is mounted on a the cooling plate, which is fixed to a cold finger /not shown on the figures/, while the plate 20 is connected separately to each of the bases 1 through known connecting elements, for example screws. The described construction of the housing is functional and allows the realization of a block assembly of an unlimited number of housings, which can easily be done as a result of an appropriate orientation of the cover 14 to the base 1, which provides the necessary coaxiality of the holes 5, which are designed for the block assembly of the housings.

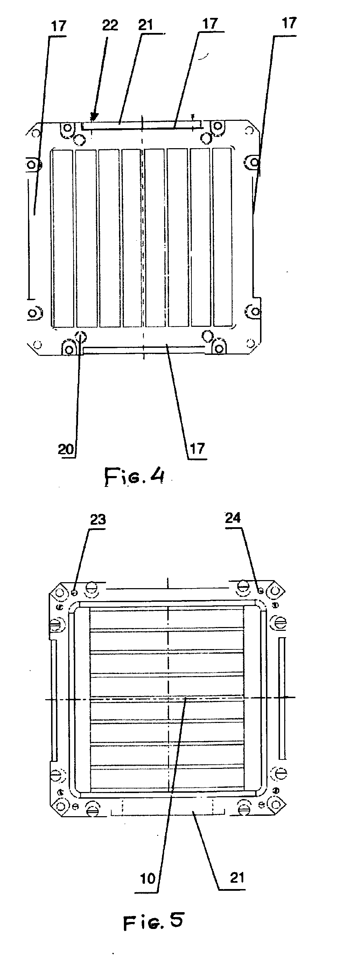

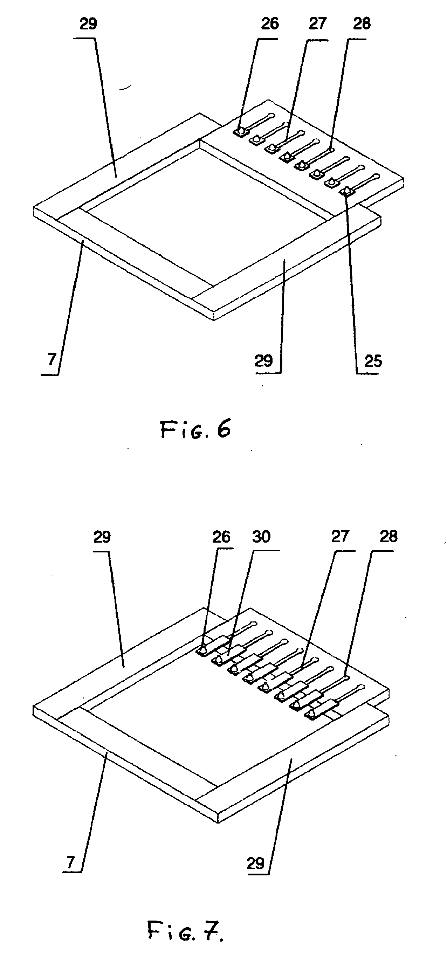

On the surface of the housing /fig. 5/ there are assembly holes 21 in which mechanical spacers 22 are placed /fig. 7/, preferably made of a heat resistance material.

In fig. 6 the lower board 7 is shown with a contact platform on one of its sides, on whose surface a contact jut 23 is realized, for example produced of Indium, a conduction strip 24 and a connector area 25 for connecting to external cables, such that all three elements 23, 24 and 25 are connected electrically to each other. On each contact platform there is at least one contact stud 23, one conduction strip 24 and a connector area 25 for connecting to external cables.

According to a one preferred realization of the board 7, it is appropriate the area 26 of the board 7 to be made with a deposited compensation layer on this surface.

According to another realization of board 7, on top of the area 26 there is a pad.

When using one of the described variants of the board 7 the thickness of the compensational layer or of the pad is defined in compliance with the shape and the size of the contact studs 23, which guarantees full contact between the board 7 and the crystal 10, as the contact studs 23 are with a preliminary defined height.

In fig. 7 is shown a variant of the lower board 7, where the contact studs 23 are realized on top of the contact spring elements 27 which are fixed stably to the board 7 and are electrically connected to the conducting strips 24, for example by soldering. In the described realization of board 7, in the connect areas 26 there is a compensational layer or on the surface of that area there are a multitude of profile elements, produced by a plastic material which has the quality of deformation when pressure is applied, such that after pressing the mechanical contact surface between the board 7 and the crystal 10 increases considerably, due to the fact that the mentioned surfaces have certain flatness deviations.

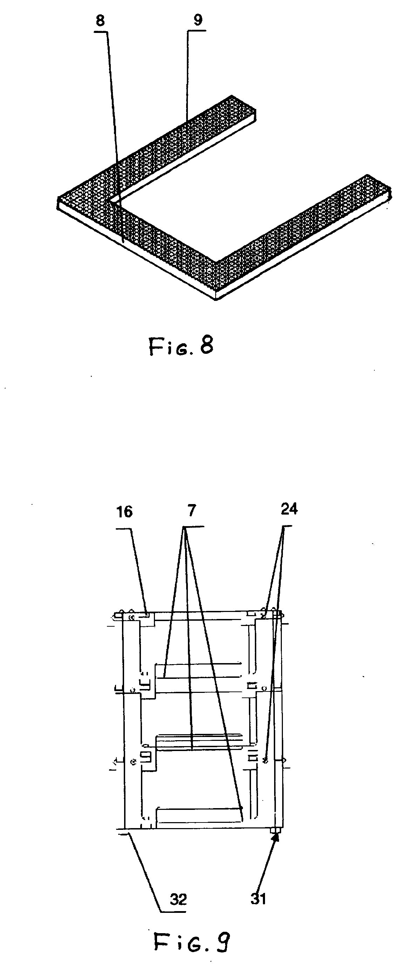

In fig. 8 a variant of the detector housing is shown with the possibility the packing elements 8 and 12 to be realized with increased contact surfaces between the crystal and the plate by using a thin indium pad /between 0.1-0.2 mm thickness/ and volumetric shaped figures 9 on it, for example shaped as pyramids, cones or spherical segments which are deformed when pressing the crystal 10 and the plate 7.

It is appropriate as well on the periphery of the crystal 10 to be realized side chamfers and after applying pressure in the chamfer zone multiple miniature support elements are formed, and as a result the crystal 10 is fixed reliably in side directions and the reliability of preservation of the crystal position after the pressing increases.

The described technical realizations which are presented on fig. 7 and 8 and can be applied for both boards - the lower 7 and the upper 13 one.

As already mentioned, the construction of the housing allows the realization of a detector block construction, where the assembly of the separate housings is realized mechanically through connecting elements, which pass through designed holes. In fig. 9 there is a sample assembly of three housings in one block with the use of connecting elements, for example threaded studs and nuts, thus realizing a common block construction, which includes several Germanium /Ge/ detectors.

## Claims

1. Housing for a Ge (germanium) detector consisting of a base, a Ge crystal, an elastic element and a cover, **characterized in that** said base inner volume are mounted successively from bottom upwards a lower board /7/, a compensation element /6/, a lower packing element /8/, a Germanium /Ge/ crystal /10/, an upper packing element /12/ and an upper board /13/, and that the elastic element /15/ is carried out as a rectangular wave washer spring, and that the outside walls of the housing are realized with vertical channels /17/ in which a cooling plate /20/ is positioned.

2. Housing for a Germanium /Ge/ detector, according to claim 1, for which is characteristic that the said compensation element /6/ is realized as a ring.

3. Housing for a Germanium /Ge/ detector, according to claim 1, for which is characteristic that the said lower /7/ and the upper /13/ boards are realized with specially designed contact platforms, which include a contact stud /23/, a conductive strip /24/ and a connect area /26/for joining of external inputs.

4. Housing for a Germanium /Ge/ detector, according to claims 1 and 3, for which is characteristic that on the said lower /7/ and upper /13/ boards are realized areas with a height defined by the dimensions of the contact studs /23/.

5. Housing for a Germanium /Ge/ detector, according to claims 1, 3 and 4, for which is characteristic that the said contact studs /23/ can be mounted on elastic elements /27/, which are fixed to the boards /7/ and /13/ and are electrically connected to conductive strips /24/.

6. Housing for a Germanium /Ge/ detector, according to claim 1, for which is characteristic that when the said packing elements /8/ and /12/ are pads, for example using Indium, after pressing the crystal /10/ between the boards /7, 13/ a multitude of miniature for the crystal support elements /9/are formed.

7. Housing for a Germanium /Ge/ detector, according to claim 1, which for is characteristic that the said channels /17/ are realized in a prismatic shape.

8. Housing for a Germanium /Ge/ detector, according to claim 1, for which is characteristic that at least two housings can be mounted mechanically together using connecting elements.
